# EUROPÄISCHE PATENTANMELDUNG

(11) **EP 0 863 114 A1**
(43) Veröffentlichungstag der Anmeldung: **09.09.1998**
(21) Anmeldenummer: 97103658.7
(22) Anmeldetag: 05.03.1997
(51) Int. Cl.: C04B 28/32, C04B 28/02, C04B 40/00, C04B 18/02

(54) **Dauerplastisches Bergbauversatzmaterial unter Verwendung von Shredderleichtfraktionen**

(71) Anmelder: Bäumer, Michael, 48155 Münster (DE)
(72) Erfinder: Bäumer, Michael, 48155 Münster (DE)
(74) Vertreter: Grünecker, Kinkeldey, Stockmair & Schwanhäusser Anwaltssozietät

(57) **Zusammenfassung**

Die Erfindung betrifft ein dauerplastisches Bergbauversatzmaterial enthaltend mindestens eine Shredderleichtfraktion, mindestens eine Bindemittelkomponente, mindestens einen Füllstoff und eine Salzlösung als Anmischflüssigkeit, erhältlich durch Einbinden der Shredderleichtfraktion in eine dauerplastische Matrix, umfassend eine konzentrierte, gelartig verfestigte Salzlösung mit einem Gesamtsalzgehalt von mehr als 250 g/l, und mindestens ein basisches Bindemittel, derart, daß ein druckfester, dauerplastischer Körper mit noch vorhandenen Restanteilen der Salzlösung gebildet wird. Dieses kann überall dort eingesetzt werden, wo unterirdische Hohlräume beispielsweise in Bergwerken zur Gewährleistung der Bergbausicherheit zu verfüllen sind.

## Beschreibung

Die Erfindung betrifft ein dauerplastisches Bergbauversatzmaterial unter Einsatz von Shredderleichtfraktionen. Dieses kann überall dort eingesetzt werden, wo unterirdische Hohlräume beispielsweise in Bergwerken zur Gewährleistung der Bergbausicherheit zu verfüllen sind.

Als Bergbauversatzstoffe eignen sich feste Stoffe, die in der Lage sind, Druck aufzunehmen und dem wirkenden Gebirgsdruck und der Verformung des Gebirges entgegenzuwirken, und die weder mit dem Wirtsgestein Reaktionen eingehen, noch langzeitig Fäulnis-, Schwel-, Zersetzungs- und Gasbildungsprozessen unterliegen. Versatzstoffe können Einzelstoffe oder Stoffmischungen sein. Bekannt sind Bergbauversatzstoffe in Form von pumpbaren Mischungen mit selbsthärtenden Eigenschaften. Diese bestehen in der Regel ähnlich einem Beton aus feinkörnigen Komponenten, gröberen Zuschlagstoffen und einer Anmischflüssigkeit, sowie einem mineralischen Bindemittel, wie Zement. Letzteres kann ganz oder teilweise durch die Verwendung puzzolanisch erhärtender Stäube ersetzt werden. Als Zuschlagstoffe sind Salze aus Abraumrückständen des Kali- und Salzbergbaues, aber auch Kunststoffe brauchbar, wobei im besonderen Maße Vorkehrungen gegen Zersetzungs- und Gasbildungsprozesse erforderlich sind.

Aus DE 4213119 und DE 19529850 sind Verfahren bekannt, Hohlräume in salinaren Formationen durch einen Pumpversatz zu verfüllen. Der Pumpversatz wird in die zu verfüllenden Grubenhohlräume als pastöse Pumpversatzmasse eingebracht und bindet zu einem festen Körper ab. Bekannterweise neigen derart verfestigte Körper zum Sprödbruch und unter petrostatischer Auflast eröffnen Wegsamkeiten für fluide Phasen und damit verbundene Elutionsprozesse.

Kunststoffhaltige Stoffe, insbesondere schaumstoffhaltiges Shreddergut, wie Autoshredderleichtfraktionen sind als Versatzstoffe direkt nicht brauchbar. Auch in Stoffmischungen besteht das Problem der langzeitigen Instabilität durch Zersetzungs- und Gasbildungsprozesse, welche auch mit den für Kunststoffe vorgeschlagenen Zusätzen, wie Asche- und Bindemittelzusatz, durch Zusatz einer alkalisch reagierenden Komponente, wie Calciumhydroxid, nach DE 4238152 nicht unterdrückt werden können.

Der Erfindung liegt die Aufgabe zugrunde, einen Versatzstoff zu schaffen, der hohe Anteile an nicht verwertbaren Shredderleichtfraktionen aus der Altautoverwertung und/oder aus der Misch- und Sammelschrottaufbereitung enthält, und der die mechanischen Anforderungen an einen Versatzstoff erfüllt und gleichzeitig keinerlei Zersetzungs-, Fäulnis- oder Schwel- bzw. Gasbildungsprozessen nach dem Einbringen in den zu versetzenden Hohlraum unterliegt.

Die Aufgabe wird erfindungsgemäß gelöst durch einen dauerplastischen Bergbauversatzstoff, enthaltend mindestens eine Shredderleichtfraktion, mindestens eine Bindemittelkomponente, mindestens einen Füllstoff und eine Salzlösung als Anmischflüssigkeit, erhältlich durch Einbinden der Shredderleichtfraktion in eine dauerplastische Matrix, umfassend eine konzentrierte, gelartig verfestigte Salzlösung mit einem Gesamtsalzgehalt von mehr als 250 g/l, und mindestens ein basisches Bindemittel, derart, daß ein druckfester, dauerplastischer Körper mit noch vorhandenen Restanteilen der Salzlösung gebildet wird. Diese Restanteile unterbinden aufgrund ihrer extrem hohen Chloridkonzentration sicher die Zersetzungs-, Fäulnis- oder Schwelprozesse des Kunststoffes.

Die vorliegende Erfindung stellt weiterhin ein Verfahren zur Herstellung eines dauerplastischen Bergbauversatzstoffs, enthaltend mindestens eine Shredderleichtfraktion, mindestens eine Bindemittelkomponente, mindestens einen Füllstoff und eine Salzlösung als Anmischflüssigkeit, zur Verfügung, das gekennzeichnet ist durch das Einbinden der Shredderleichtfraktion in eine dauerplastische Matrix, umfassend eine konzentrierte, gelartig verfestigte Salzlösung mit einem Gesamtsalzgehalt von mehr als 250 g/l, und mindestens ein basisches Bindemittel, in der Weise, daß ein druckfester, dauerplastischer Körper mit noch vorhandenen Restanteilen der Salzlösung gebildet wird.

Außerdem betrifft die vorliegende Erfindung die Verwendung von Shredderleichtfraktionen in dauerplastischen Bergbauversatzstoffen. Die erfindungsgemäß verwendeten Shredderleichtfraktionen enthalten unter anderem Kunststoffe in wechselnden Anteilen.

Aufgabe der Erfindung ist es weiterhin, das Shreddermaterial mit maximal möglichem Anteil in die Bergbauversatzmischungen einzubeziehen und in verschiedenen Darbietungsformen, wie Pumpversatz, Rollgranulat bzw. in Big-Bag-konfektionierten Blöcken herzustellen und dabei durch deren Einbindung in eine netzwerkbildende Matrix eine vollständige Immobilisierung der organischen Bestandteile des Shreddermaterials zu erreichen und deren unzulässig hohe Verformbarkeit zu beseitigen.

Es wurde überraschenderweise gefunden, daß eine hochkonzentrierte Salzlösung, vorzugsweise gewählt aus magnesiumchloridhaltigen Solen, zusammen mit einem basischen Zusatzstoff, und mindestens einer Shredderleichtfraktion eine Mischung bildet, welche nach dem Erhärten einen Körper mit dauerplastischen Eigenschaften ergibt. Dieser Körper bleibt von nicht vollständig abgebundener Lösung durchfeuchtet. In diesem dauerplastischen Körper werden alle Arten mikrobieller Zersetzungsprozesse unterbunden. Die Mischung ist darüber hinaus nicht brennbar. Die erfindungsgemäße Mischung weist einen solchen pH-Wert auf, daß Gasbildungsprozesse, hervorgerufen durch die Zersetzung von im Autoshredder enthaltenen Metallanteilen, praktisch keine Rolle mehr spielen.

Die Erfindung wird wie folgt im einzelnen beschrieben:

Durch das Recycling von Altautos sowie aus der Misch- und Sammelschrottverarbeitung fällt ein Gemisch von unterschiedlichen Stoffen an, die erst aufbereitet werden müssen, um das Material in ein verwertbares und deponiefähiges Material aufzusplitten. Als Regelbehandlung gilt heute die Verarbeitung in einer Shredderanlage zur Erzielung möglichst sortenreiner Fraktionen.

Die Einzelkomponenten von Pumpversatzmassen umfassen körnige, pulverförmige mineralische Stoffe, möglichst aus industriellen Abfällen, und eine Salzlösung als Anmischflüssigkeit. Die Verfestigung der Pumpversatzmasse erfolgt ohne Bindemittel, wenn die Abfälle in ausreichendem Maße puzzolanische Eigenschaften aufweisen bzw. bindemittelgestützt sind, beispielsweise durch Zugabe von Halbbranntdolomit.

Auch auf die Möglichkeit der Zugabe von Shreddermaterial wird hingewiesen, ohne daß hierauf in Ausführungsbeispielen eingegangen wird.

Für die nicht verwertbare Shredderleichtfraktion ist eine Deponierung übertrage aus Platz- und Sicherheitsgründen, resultierend aus den Schaumstoffanteilen und aufgrund des hohen Gehaltes an organischen Bestandteilen, ein Problem. Aufgrund der mechanischen Eigenschaften (Schaumstoffanteile) und der chemischen Stoffzusammensetzung eignen sich Autoshredderleichtfraktionen weder als Einzelstoff, noch als Zuschlagstoff für herkömmliche Mischungen als Versatzgut.

Das geshredderte, zur Deponierung verbrachte Material aus der Leichtfraktion der Altauto- und aus der Misch- und Sammelschrottverwertung weist beispielsweise folgende Zusammensetzung auf:
- Ergebnisse der Sortieranalyse der Shredderleichtfraktion ohne Vorbehandlung (d. h. ohne Abtrennung von metallischen Bestandteilen, Schaumstoffen und textilem Gewebe)

| **Sortiergut** | **Bereich in %** |
|---|---|
| magn. Metalle | 3 - 10 |
| Ne-Metalle | 4 - 12 |
| staubig/sandiges Material, Keramik | 5 - 50 |
| Schaumstoff | 10 - 27 |
| Kunststoff, massiv, Gimmi | 10 - 22 |
| textiles Gewebe | 8 - 23 |
| Glas | 1,5 - 3,5 |

- Ergebnisse der physikalischen/chemischen Analyse einer typischen mittleren Shredderleichtfraktionzusammensetzung

| **Parameter** | **Dimension** | **Ergebnis** |
|---|---|---|
| Reindichte | g/cm³ | 1,835 |
| Schüttdichte | g/cm³ | 0,30 |
| Trockenrückzstand 105 °C | % | 97,5 |
| Glühverlust 550 °C | % | 52,0 |
| Ca-Verbindungen | % | 2,3 |
| Mg-Verbindungen | % | 0,4 |
| Na-Verbindungen | % | 0,3 |
| K-Verbindungen | % | 0,1 |
| Al₂O₃/Fe₂O₃ | % | 20,0 |
| SiO₂ | % | 15,0 |
| Phosphat | % | 0,3 |
| HCl-Unlösliches | % | 5,0 |
| Verfügbares CO₂ | % | 0,5 |
| TOC | % | 10,5 |
| IR-KW | % | 2,3 |

Bei der erfindungsgemäßen Einbindung von Autoshredderleichtfraktionen in eine dauerplastisch bleibende hochchloridische Matrix werden sowohl die mechanischen Eigenschaften als auch die chemische Reaktionsfähigkeit oder Zersetzlichkeit des Gutes drastisch verbessert und überraschend ein Körper mit hoher Resistenz und mechanischer Widerstandsfähigkeit gegenüber Gebirgsdruck und anderen geogenen Faktoren erzeugt, dessen positive Eigenschaften langfristig erhalten bleiben.

Überraschenderweise tritt durch die Reaktion von chloridischer Salzlösung, basischen Zusatzstoffen und im Shreddergut enthaltenen Schwermetallen eine extrem hohe Immobilisierung etwaiger Bestandteile ein.

Umweltrelevante Bestandteile im Shreddergut liegen in der Regel in folgenden Konzentrationsbereichen:

| | | |
|---|---|---|
| Chrom | mg/kg TS | 150 |
| Zink | mg/kg TS | 9.000 |
| Zinn | mg/kg TS | 350 |
| Blei | mg/kg TS | 2.100 |
| Kupfer | mg/kg TS | 8.000 |
| Cadmium | mg/kg TS | 30 |
| Nickel | mg/kg TS | 140 |
| PCB | mg/kg TS | 10 |

Sie stellen somit bei Ablagerung über Tage ein umweltrelevantes Gefahrenpotential dar.

Erfindungsgemäß wird das Shreddermaterial für die bergbauliche Verwertung vorzugsweise auf Korngrößen von weniger als 15 mm, insbesondere auf weniger als 10 mm zerkleinert, wobei Körnungen im Bereich von 3 bis 8 mm den Idealfall darstellen. Der Zerkleinerung der Shredderfraktion geht vorzugsweise eine Abscheidung der eisenhaltigen Bestandteile und der Nichteisenmetallbestandteile voraus, wobei im Bedarfsfall auch die voluminösen Schaumstoffanteile und textilen Anteile abgetrennt und gesondert einer wertstofflichen bzw. einer thermischen Verwertung zugeführt werden können.

In Ausgestaltung der Erfindung kann auch anstelle der zerkleinerten losen Shredderfraktion ein Kompaktat aus Shredder eingesetzt werden. Dieses Kompakt wird vorzugsweise auf eine Endkorngröße von weniger als 100 mm zerkleinert. Die bevorzugte Zugabemenge des Kompakts zu dem erfindungsgemäßen Versatzstoff beträgt maximal 50%.

Es wurde überraschend gefunden, daß bei Zusatz von gelartig bzw. netzwerkartig erhärtenden Bindemittelkomponenten und hochkonzentrierten Salzlösungen die eingangs genannten Nachteile kompensiert werden und ein brauchbarer Versatzkörper hergestellt werden kann, der selbständig erhärtet und dauerplastisch verbleibt.

Die dauerplastischen Eigenschaften werden einerseits durch den Plasteanteil des Shreddergutes hervorgerufen und andererseits durch gelartig erstarrte Oxidchloride, welche die Salzlösung physikalisch und chemisch fixieren. In diese Matrix lassen sich auch feinkörnige pulvrige bis staubförmige Komponenten einbinden, welche die Gesamteigenschaften des erfindungsgemäßen Versatzstoffes positiv beeinflussen können, etwa in Richtung geringerer Zusammendrückbarkeit oder verbesserten Fließverhaltens bei Druckeinwirkung.

Das Gemisch ist nicht brennbar und genügt allen Anforderungen einschließlich den Brandanforderungen, die an ein Bergbauversatzmaterial gestellt werden. Als Salzlösung sind bevorzugt MgCl₂-haltige Salzlösungen mit einem MgCl₂-Mindestgehalt von 160 g MgCl₂/l Lösung einzusetzen, die neben MgCl₂ auch noch K⁺-, Na⁺-, Cl⁻ - und Sulfat-Ionen enthalten können. Darüber hinaus können in Abhängigkeit von der gewählten mineralischen, gelbildenden Matrix auch sogenannte Haldenlösungen, beispielsweise aus Kalibergbau-Rückstandshalden, die zumeist NaCl-Gehalte von mindestens 50 g/l aufweisen, verwendet werden.

Der Einsatz von MgCl₂-haltigen Lösungen ist besonders für Versatzbereiche im Carnallitgestein zu empfehlen. Als Bindemittelkomponenten sind verschiedene oxidische bzw. hydroxidische Stoffgruppen, wie Branntkalk (CaO, z.B. als Pulver), Kalkhydrat [z.B. Ca (OH)₂ ,beispielsweise als Pulver], Branntdolomit (CaO-MgO, z.B. als Pulver), Dolomithydrat [z.B. Ca (OH)₂ -Mg(OH)₂, beispielsweise als Pulver], Magnesia (MgO, z.B. als Pulver) und Zinkoxid (ZnO, z.B. als Pulver), sowie verschiedene Rückstände aus industriellen Verarbeitungsprozessen, die einen oder mehrere dieser Stoffe enthalten, besonders geeignet.

Bei Einsatz von NaCl-haltigen Lösungen sind folgende Bindemittelkomponenten bevorzugt:
(1) Bindemittel mit puzzolanischen Eigenschaften, wie Flugstäube und Aschen aus der Kohleverbrennung,
(2) Bindemittel mit hydraulischen Eigenschaften, wie Zemente, und
(3) Rückstände aus industriellen Verarbeitungsprozessen, die eine oder mehrere der unter (1) und (2) genannten Bindemittelkomponenten enthalten.

Die zur Darstellung des Bergbauversatzmaterials eingesetzten, feindispersen Füllstoffe sind vorzugsweise mineralischen Ursprungs. Sie können sowohl in Form von Pulvern, als auch in Form von Schlämmen eingesetzt werden. Beispiele für pulverförmige Füllstoffe umfassen Filterstäube aus industriellen Entstaubungs- und/oder Rauchgasreinigungsanlagen. Beispielhaft seien genannt Filterstäube aus der Glas- und Stahlherstellung und Filterstäube und Rauchgasreinigungsprodukte aus Müll- bzw. Sonderabfallverbrennungsanlagen. Die Korngröße dieser pulverförmigen Füllstoffe beträgt im allgemeinen weniger als 250 µm, vorzugsweise 10 bis 40 µm. Beispiele für Füllstoffe in Form von Schlämmen sind Galvanik-, Metallhydroxid-, Neutralisations- und Phosphatierschlämme.

Die Salzlösungen mit den entsprechenden Bindemittelzusätzen werden erfindungsgemäß vorzugsweise in einem Intensivmischer zur Erzeugung der gelartigen, netzwerkbildenden Matrix vorgemischt, bevor die Zugabe der aufbereiteten Shredderleichtfraktion und der Füllstoffe in Form von Pulvern und/oder Schlämmen erfolgt.

Das Mischungsverhältnis der Komponenten Shredderleichtfraktion : Bindemittel : Füllstoff : Salzlösung wird vorzugsweise auf Werte von 35-50% : 5-20% : 15-25% : 15-40% eingestellt. Die Rohdichte der Versatzmischung beträgt erfindungsgemäß vorzugsweise mehr als 1,3 g/cm³.

Entsprechend den bevorzugten erfindungsgemäßen Auführungsformen wird die Zusammensetzung der Bergbauversatzmischungen so eingestellt, daß sowohl Granulate als auch selbstverfestigende Formkörper in einer Transportverpackung, z. B. Big Bag, oder hydromechanisch förderbare Systeme dargestellt werden können. Gemeinsames Kriterium der genannten Bergbauversatzmischungen sind Rohdichtewerte von vorzugsweise mehr als 1,3 g/cm³ im verfestigten Zustand.

Gemäß einer ersten Ausführungsform wird der erfindungsgemäße dauerplastische Bergbauversatzstoff in Form eines Rollgranulats mit einer bevorzugten Korngröße von höchstens 15 mm, vorzugsweise 4 bis 10 mm, und einer bevorzugten Einzelkornfestigkeit (statische Festigkeit) nach der Aushärtung für Körner der Fraktion mit 4 bis 10 mm Korngröße zwischen 5 und 25 N, vorzugsweise zwischen 10 und 15 N, hergestellt.

Die Herstellung der Granulate kann derart erfolgen, daß in der Schlußphase des intensiven Misch- und Rollprozesses eine Bepuderung der sogenannten Grüngranalien mit Bindemitteln oder mit Abfallstoffen, die Bindemittelcharakter besitzen, vorgenommen wird. Nach einer Reifezeit von im allgemeinen 2 bis 48 Stunden, vorzugsweise 2 bis 8 Stunden, erreichen die Granalien ihre Einbaufestigkeit als Bergbauversatzmaterial. Sie sind vorzugsweise auch ohne Trocknung rieselfähig, emissionsneutral und nach erfolgter Absiebung bei einem Siebschnitt von beispielsweise 0, 150 mm nichtstaubend.

Gemäß einer zweiten Ausführungsform wird der erfindungsgemäße dauerplastische Bergbauversatzstoff in Form eines zerkleinerten Kompakts mit einer bevorzugten Korngröße von weniger als 10 mm hergestellt.

Die dauerplastischen Bergbauversatzstoffe gemäß der ersten oder zweiten Ausführungsform können als körnige Komponente in üblichen Pumpversatzrezepturen in einer Menge von beispielsweise 20 bis 60 Ma.-%, bezogen auf den Trockensubstanzanteil, zur Verfüllung luft- bzw. lösungserfüllter Hohlräume verwendet werden.

Gemäß einer dritten Ausführungsform ist der erfindungsgemäße dauerplastische Bergbauversatzstoff erhältlich durch die Herstellung einer pastösen Masse in einem Intensivmischer mit einer bevorzugten Anmischflüssigkeitsmenge von 30 bis 40%, Abfüllen der pastösen Masse in eine Transportverpackung, vorzugsweise in Big Bags, und Erhärtenlassen der Masse zu einem Block mit bevorzugten einaxialen Druckfestigkeiten von mindestens 1 Mpa.

Die nachfolgenden Beispiele erläutern die Erfindung.

### Beispiel 1

Die nachfolgende beispielhafte Rezeptur ist insbesondere zur Herstellung von MgCl₂-lösungsstabilen Granalien zur Vefüllung carnallitischer Feldesteile in Versatzbergwerken geeignet.

Die Granalien werden durch Mischung/Granulierung aus folgenden Einzelstoffen hergestellt:

| | Einsatzstoff | Ma.-Anteil im Granulat [%] |
|---|---|---|
| • | Shredderleichtfraktion < 10 mm | 40 |
| • | Stahlwerksfilterstaub | 21 |
| • | Schlämme | 8¹ |
| • | Bindemittel (Dolomitkalkhydrat) | 5 |
| • | Bepuderungsmittel (Braunkohlenfilterstaub) | 5 |
| • | MgCl₂-Lösung | 21 |

| | | |
|---|---|---|
| ¹ bezogen auf Trockensubstanz | | |

### Beispiel 2

Die nachfolgende Rezeptur ist zur Herstellung von Granalien geeignet die als Versatzmaterial in luft- oder lösungserfüllten salinaren Bereichen vom Steinsalz-, Sylvinit- oder Hartsalztyp sowie in Bereichen außerhalb des Salzbergbaues geeignet.

Die Granalien werden durch Mischung/Granulierung aus folgenden Einzelstoffen hergestellt:

| | Einsatzstoff | Ma.-Anteil im Granulat [%] |
|---|---|---|
| • | Shredderleichtfraktion < 10 mm | 35 |
| • | Stäube | |
| | - MVA-Filterstaub | 18 |
| | - Ziehmittelrückstände | 5 |
| • | Schlämme | 10² |
| • | Bindemittel (Zement, Kraftwerksflugstäube) | 10 |
| • | Bepuderungsmittel (Steinkohlenfilterstaub) | 6 |
| • | Feuchtegehalt (Wasser und/oder Haldenlauge) | 16 |

| | | |
|---|---|---|
| ² bezogen auf Trockensubstanz | | |

### Beispiel 3

Die nachfolgende Rezeptur dient zur Herstellung von verfestigten Formkörpern in einer Transportverpackung (z. B. Big Bag) zur Verwertung in salinaren Versatzbergwerken.

Die pastöse Masse wird in einem Intensivmischer aus folgenden Einzelstoffen hergestellt:

| | Einsatzstoff | Ma.-Anteil im Granulat [%] |
|---|---|---|
| • | Shredderleichtfraktionskompaktat auf < 100 mm zerkleinert | 45 |
| • | Stahlwerksfilterstaub | 17 |
| • | Schlämme (Trockensubstanzanteil) | 3 |
| • | Bindemittel (MgO) | 5 |
| • | MgCl₂-Lösung | 30 |

## Patentansprüche

1. Dauerplastischer Bergbauversatzstoff, enthaltend mindestens eine Shredderleichtfraktion, mindestens eine Bindemittelkomponente, mindestens einen Füllstoff und eine Salzlösung als Anmischflüssigkeit, erhältlich durch Einbinden der Shredderleichtfraktion in eine dauerplastische Matrix, umfassend eine konzentrierte, gelartig verfestigte Salzlösung mit einem Gesamtsalzgehalt von mehr als 250 g/l, und mindestens ein basisches Bindemittel, derart, daß ein druckfester, dauerplastischer Körper mit noch vorhandenen Restanteilen der Salzlösung gebildet wird.

2. Dauerplastischer Bergbauversatzstoff nach Anspruch 1, **dadurch gekennzeichnet,** daß die Komponenten Shredderleichtfraktion : Bindemittel : Füllstoff : Salzlösung im Mischungsverhältnis von 35-50% : 5-20%: 15-25% : 15-40% eingesetzt werden und die Rohdichte der Versatzmischung auf Werte von mehr als 1,3g/cm³ eingestellt wird.

3. Dauerplastischer Bergbauversatzstoff nach Anspruch 1 oder 2, **dadurch gekennzeichnet,** daß
- die Salzlösung MgCl₂-haltige Salzlösungen mit einem MgCl₂-Mindestgehalt von 160g/l Lösung umfaßt, die neben MgCl₂ noch K^{**+**}-, Na⁺-, Cl⁻- und Sulfat-Ionen enthalten können; und
- die Bindemittelkomponente gewählt wird aus (1) Branntkalk, (2) Kalkhydrat, (3) Branntdolomit, (4) Dolomithydrat, (5) Magnesia, (6) Zinkoxid, und/oder (7) Rückständen aus industriellen Verarbeitungsprozessen, die einen oder mehrere der unter (1) bis (6) genannten Stoffe enthalten.

4. Dauerplastischer Bergbauversatzstoff nach Anspruch 1 oder 2, **dadurch gekennzeichnet,** daß die Salzlösung sogenannte Haldenlösungen, die NaCl-angereicherte Solen mit NaCl-Gehalten von mindestens 50g NaCl/l Lösung entsprechen, umfaßt;
und die Bindemittelkomponente gewählt wird aus
(1) Bindemitteln mit puzzolanischen Eigenschaften, wie Flugstäuben und Aschen aus der Kohleverbrennung,
(2) Bindemitteln mit hydraulischen Eigenschaften, wie Zementen, und
(3) Rückständen aus industriellen Verarbeitungsprozessen, die eine oder mehrere der unter (1) und (2) genannten Bindemittelkomponenten enthalten.

5. Dauerplastischer Bergbauversatzstoff nach einem der Ansprüche 1 bis 4, **dadurch gekennzeichnet,** daß das geshredderte Material gewählt wird aus der Leichtfraktion der Altautoverschrottung und aus den Leichtfraktionen der Misch- und Sammelschrottaufbereitung, und das Shredderleichtgut auf Korngrößen von weniger als 15 mm, vorzugsweise im Bereich von 3 bis 8 mm, zerkleinert wird, dem eine Abreicherung der Eisenbestandteile, eventueller weiterer Metallanteile und voluminöser Schaumstoffanteile und textiler Anteile vorangeht.

6. Dauerplastischer Bergbauversatzstoff nach einem der Ansprüche 1 bis 5, **dadurch gekennzeichnet,** daß der Füllstoff feindispers mit einer Korngröße von weniger als 250 µm, vorzugsweise von 10 bis 40 µm, ist, und gewählt wird aus Stäuben aus industriellen Entstaubungs- und/oder Rauchgasreinigungsanlagen, wie Filterstäuben und Rauchgasreinigungsprodukten aus der Müll- und/oder Sonderabfallverbrennung, und Schlämmen, wie Galvanikschlämmen, Metallhydroxidschlämmen und Neutralisationsschlämmen.

7. Dauerplastischer Bergbauversatzstoff nach einem der Ansprüche 1 bis 6, in Form eines Rollgranulats mit einer Korngröße von höchstens 15 mm, vorzugsweise 4 bis 10 mm, und einer Einzelkornfestigkeit (statische Festigkeit) nach der Aushärtung für Körner der Fraktion mit 4 bis 10 mm Korngröße zwischen 5 und 25 N, vorzugsweise zwischen 10 und 15 N.

8. Dauerplastischer Bergbauversatzstoff nach einem der Ansprüche 1 bis 6 in Form eines zerkleinerten Kompakts mit einer Korngröße von weniger als 10 mm.

9. Dauerplastischer Bergbauversatzstoff nach einem der Ansprüche 1 bis 6, erhältlich durch die Herstellung einer pastösen Masse in einem Intensivmischer mit einer Anmischflüssigkeitsmenge von 30 bis 40%, Abfüllen der pastösen Masse in eine Transportverpackung, vorzugsweise in Big Bags, und Erhärtenlassen der Masse zu einem Block mit einaxialen Druckfestigkeiten von mindestens 1 Mpa.

10. Dauerplastischer Bergbauversatzstoff nach Anspruch 9, **dadurch gekennzeichnet,** daß die Shredderleichtfraktion in Form eines Kompakts eingesetzt wird, welches auf eine Endkorngröße von weniger als 100 mm zerkleinert wird und die Zugabemenge des Kompakts maximal 50% beträgt.

11. Verfahren zur Herstellung eines dauerplastischen Bergbauversatzstoffs, enthaltend mindestens eine Shredderleichtfraktion, mindestens eine Bindemittelkomponente, mindestens einen Füllstoff und eine Salzlösung als Anmischflüssigkeit, gekennzeichnet durch das Einbinden der Shredderleichtfraktion in eine dauerplastische Matrix, umfassend eine konzentrierte, gelartig verfestigte Salzlösung mit einem Gesamtsalzgehalt von mehr als 250 g/l, und mindestens ein basisches Bindemittel, in der Weise, daß ein druckfester, dauerplastischer Körper mit noch vorhandenen Restanteilen der Salzlösung gebildet wird.

12. Verwendung von Shredderleichtfraktionen in dauerplastischen Bergbauversatzstoffen.

13. Verwendung des dauerplastischen Bergbauversatzstoffs nach Anspruch 7 oder 8 als körnige Komponente in üblichen Pumpversatzrezepturen in einer Menge von 20 bis 60 Ma.-%, bezogen auf den Trockensubstanzanteil, zur Verfüllung luft- bzw lösungserfüllter Hohlräume.
